Europäisches Patentamt

European Patent Office

Office européen des brevets

(19)

(11) Veröffentlichungsnummer: **0 249 956**
**B1**

(12) # EUROPÄISCHE PATENTSCHRIFT

(45) Veröffentlichungstag der Patentschrift:
08.08.90

(51) Int. Cl.⁵: **H02G 7/14**

(21) Anmeldenummer: **87108685.6**

(22) Anmeldetag: **16.06.87**

(54) Schwingungsdämpfer für elektrische Leitungen.

(30) Priorität: **20.06.86 DE 3620727**

(43) Veröffentlichungstag der Anmeldung:
**23.12.87 Patentblatt 87/52**

(45) Bekanntmachung des Hinweises auf die Patenterteilung:
**08.08.90 Patentblatt 90/32**

(84) Benannte Vertragsstaaten:
**CH FR IT LI**

(56) Entgegenhaltungen:
**DE-C- 836 211**
**FR-A- 1 224 950**
**FR-A- 1 575 679**
**FR-A- 2 412 187**
**US-A- 1 941 731**

(73) Patentinhaber: **Bückner, Walter F.,Dr.-Ing.,
Augustenstrasse 8, D-7068 Urbach(DE)**

(72) Erfinder: **Bückner, Walter F.Dr.- Ing., Augustenstrasse 8,
D-7068 Urbach(DE)**
Erfinder: **Schuster, Martin Dipl.-Ing., Heidestrasse 51,
D-7300 Esslingen(DE)**

(74) Vertreter: **Patentanwälte Phys. Bartels Dipl.-Ing. Fink
Dr.-Ing. Held, Lange Strasse 51, D-7000 Stuttgart 1(DE)**

**Beschreibung**

Die Erfindung betrifft eine Einrichtung zum Dämpfen der Schwingungen von Freileitungsseilen, mit einem Beiseil, das an seinen beiden Enden mit je einer Verbindungsvorrichtung fest verbunden ist, die ein das Beiseilende festhaltendes Bauteil aufweist und eine das Freileitungsseil umfassende Klemme bildet.

Seile von elektrischen Freileitungen müssen insbesondere am Einlauf in Klemmen vor winderregten Schwingungen geschützt werden. Hierzu werden vorwiegend Schwingungsdämpfer eingesetzt, die je nach Bauart auf unterschiedliche Weise ihre Aufgabe erfüllen, und zwar durch:

1. Energievernichtung, d.h. physikalische Dämpfung der Leiterseilschwingung,
2. Tilgung durch Interferenz zwischen den Schwingungsgebilden (z.B. Stockbridgedämpfer),
3. Weiterleiten der Schwingungsenergie in die benachbarten Spannweiten der Freileitung durch die Hängeklemme hindurch oder an dieser vorbei, um die Schwingungen am Entstehungsort zu verringern.

Der ideale Dämpfer wird alle genannten Anforderungen mehr oder weniger wirkungsvoll miteinander verbinden.

Schwingungsdämpfer vom Typ "Stockbridge", 1925 erstmals angewandt, sind z. Zeit weit verbreitet. Sie werden in einem Abstand von der Hängeklemme, der etwa der halben Wellenlänge der häufigsten Seilschwingung entspricht, montiert. Sie bestehen in der Regel aus 2 Gewichten, die an den Enden eines 0,4 bis 0,8 m langen Stahlseiles befestigt sind. Das Seil mit diesen Gewichten wird etwa in der Mitte mittels Klemme an dem Leiterseil befestigt. Bei Seilschwingungen wird dieser Dämpfer gleichfalls in Schwingungen versetzt. Infolge der Interferenz zwischen beiden miteinander gekoppelten Schwingungsgebilden kommt es zu einer teilweisen Tilgung der Leiterseilschwingung und im geringeren Maß auch zu Energieverzehr, d.h. physikalischen Dämpfung im schwingenden Stahlseil, was zu einer entsprechenden Dämpfung der Leiterseilschwingung führt. Eine optimale Abstimmung dieses Dämpfertyps auf den weiten Frequenz- und Amplitudenbereich, der zudem unterschiedlichen Freileitungs-Seiltypen ist außerordentlich schwierig und z. Teil kaum möglich. Dies zeigte sich bei Seilbeschädigungen trotz Verwendung von Stockbridgedämpfer in Ländern, wo Stärke und örtliche und zeitliche Gleichmäßigkeit des Windes zu gefährlichen Seil-Schwingungen Anlaß gaben.

An zweiter Stelle sind die in Frankreich seit ca. 1965 vorherrschend verwendeten "Bretelle"-Dämpfer zu nennen.

Sie bestehen aus einem Stück Seil, dem sogenannten Beiseil, das in der Regel wie das Leiterseil ausgebildet ist, eine Länge von 1,5 m – 4 m hat und vor sowie hinter der Hängeklemme mittels Klemmen am Leiterseil befestigt ist. Bei einem bekannten Bretelle-Dämpfer der eingangs genannten Art (FR-A 1 224 950) sind die beiden die Beiseilenden festhaltenden, stabförmigen Bauteile mit je einer Bohrung versehen, in die das Bauseilende eingreift. Durch Verpressen, Verschweißen oder dergleichen wird eine starre Verbindung zwischen Beiseil und Bauteil hergestellt. Das Bauteil greift mit einem konischen Endabschnitt in eine konische Bohrung der am Leiterseil zu befestigenden Klemme ein und wird mittels einer Schraube in dieser Bohrung festgespannt, so daß auch die Verbindung zwischen dem Bauteil und der Klemme starr ist. Eine starre Verbindung zwischen dem Beiseilende und dem Freileitungsseil ist auch bei einem anderen bekannten Bretell-Dämpfer (FR-A 1 575 679) vorhanden, da hier die beiden an das Freileitungsseil anzusetzenden Klemmen zwei parallel zueinander verlaufende Klemmkanäle aufweisen, in welchen das Freileitungsseil bzw. das Ende des Beiseiles festgeklemmt werden. Die bekannten Bretell-Dämpfer, deren Beiseil mit einer geringen Zugspannung unter dem Freileitungsseil verlegt wird, vereinigen zwar in sich die eingangs genannten Dämpfungsmöglichkeiten.

Ein Bretelle-Dämpfer vernichtet mehr Energie als der Stockbridgedämpfer, bedingt durch die wesentliche größere Eigendämpfung je Meter des Aluminium- bzw. Stahlaluminium-Beiseils gegenüber dem relativ dünnen und kurzen Stahlseil des Stockbridgedämpfers.

Er tilgt ferner Energie, da zwischen der Beiseil- und der Leiterseilschwingung Interferenz besteht. Die Tilgung ist nicht so groß wie beim Stockbridge-Dämpfer, aber leiterseilschonender, da keine so großen Momente in Seilebene in das Leiterseil eingeleitet werden wie beim Stockbridge-Dämpfer. Seil und Beiseil haben unendlich viele Eigenfrequenzen, sind also in einem weiten Frequenzband wirkungsvoll. Der Stockbridge-Dämpfer hat dagegen nur 1 bis 2 ausgeprägte Eigenfrequenzen.

Weiterhin leitet er einen großen Teil der Schwingungsenergie von einem zu dem anderen Spannfeld und von dort wieder weiter, bis die Energie verbraucht ist. Diese Eigenschaft findet man bei den Seil-Dämpfern nur beim "Bretelle"-Dämpfer. Der Wirkungsgrad der bekannten Bretelle-Dämpfer ist jedoch unbefriedigend.

Andere Konstruktionen zur Dämpfung der Leiterseilschwingung an der Hängeklemme, dem bevorzugten Ort von Seilbrüchen, konnten sich nicht durchsetzen.

Für Bündelleitungen sind Feldabstandhalter bekannt (FR-A 2 412 187, die sowohl die Seile zwischen den Hängeklemmen an den Masten in dem erforderlichen Abstand zueinander halten, als auch schwingungsdämpfende Elemente aus Gummiformstücken enthalten.

Damit wird die Seilschwingung im Spannfeld bereits verringert und nicht erst massiv an der Hängeklemme. Die Entwicklung auf diesem Gebiet ist noch im Gang, wobei allerdings festzustellen ist, daß bei Bündelleitern durch die Koppelung der Seile mittels Abstandhalter, gleich welcher Konstruktion, bereits eine Verringerung der maximalen, also gefährlichen Schwingungsintensität gegeben ist.

Bei schwierigen Windverhältnissen und bei besonders schutzbedürftigen Bündelleitungen sind allerdings zusätzliche Dämpfer in der Nähe der Hängeklemmen an jedem Einzelseil vorzusehen. Die Dämpfung der Seilschwingungen für Einzelseile ist heute sowohl für schwierige Windbedingungen als auch ganz allgemein im Hinblick auf eine narrensichere Planung und damit Verwendung verbesserungsbedürftig.

Der Erfindung liegt daher die Aufgabe zugrunde, eine Einrichtung der eingangs genannten Art zu schaffen, mit der sich ein höherer Wirkungsgrad erreichen läßt. Diese Aufgabe löst eine Einrichtung zum Dämpfen der Schwingungen von Freileitungsseilen, welche die Merkmale des Anspruches 1 aufweisen.

Vorteilhaft Ausgestaltungen und Weiterbildungen dieser Lösung sind Gegenstand der Unteransprüche.

Im folgenden ist die Erfindung anhand von in der Zeichnung dargestellten Ausführungsbeispielen im einzelnen erläutert.

Es zeigen

Fig. 1 eine Seitenansicht eines ersten Ausführungsbeispiels im montierten Zustand,

Fig. 2 einen in vergrößertem Maßstab und teilweise aufgebrochen dargestellten Ausschnitt der Fig. 1,

Fig. 3 eine unvollständig dargestellte Draufsicht auf ein zweites Ausführungsbeispiel im montierten Zustand.

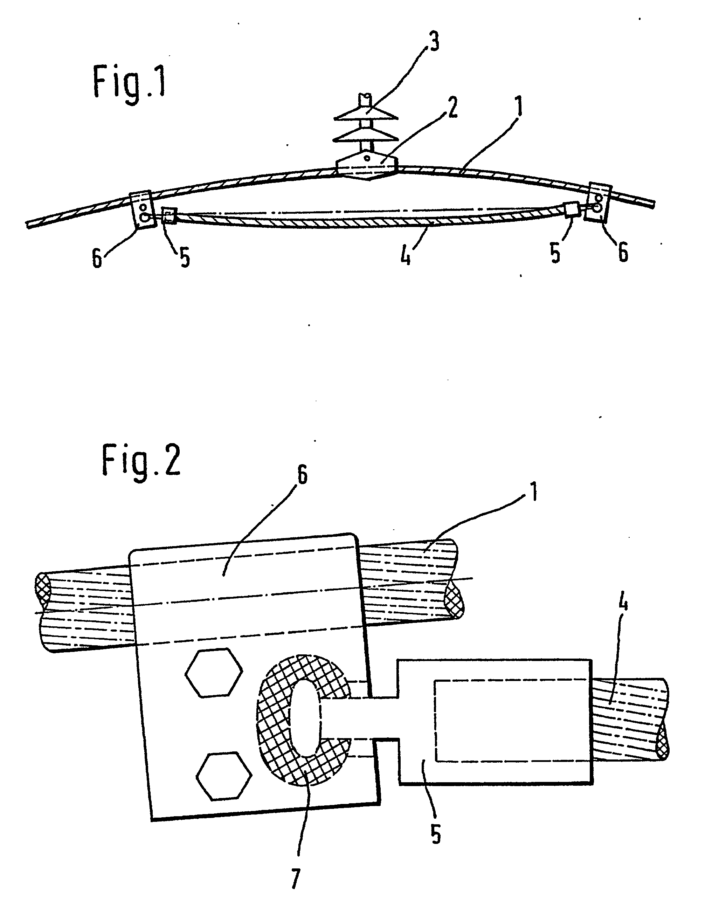

Wie Fig 1 zeigt ist ein Leiterseil 1 einer Freileitung mittels einer Hängeklemme 2 an der Isolatorenkette 3 befestigt. Unterhalb des Leiterseils ist das Beiseil 4, das beidseitig in einer Armatur 5 eingeklemmt oder eingepreßt ist, verlegt. Diese Armatur trägt an ihrem anderen Ende ein elastisches Formstück 7, das von der Klemme 6 umfaßt und gehalten und an das Leiterseil 1 angekoppelt wird. Das Beiseil ist damit kraftschlüssig, aber elastisch mit dem Leiterseil verbunden.

Die neue Konstruktion vereinigt die oben beschriebenen Vorteile des Bretelle-Dämpfers mit der hohen, bei allen Schwingungsfrequenzen wirkungsvollen Dämpfung der gummielastischen Formstücke.

Die Anordnung nach Fig. 1 und 2 führt durch die hohe Energiedämpfung der gummielastischen Elemente zu einer beträchtlichen Erhöhung der physikalischen Dämpfung im gesamten Frequenzband des schwingenden Seiles und damit zu einer umfassenderen Vernichtung von dynamischer Energie im Vergleich zu den bekannten Bretell-Dämpfern.

Für gefährdete Freileitungen kann durch Erhöhung der Zahl der gummielastischen Formstücke, parallel oder hintereinander gekoppelt, die Dämpfung erhöhten Anforderungen angepaßt werden.

Die Weiterleitung der Seilschwingungen in das angrenzende Spannfeld an dem gefährdeten Seilabschnitt an der Hängeklemme vorbei ist wie bei einem bekannten Bretelle-Dämpfer sichergestellt, ebenso die Tilgungseigenschaft, die durch die Verwendung der gummielastischen Konstruktionselemente noch erhöht wird.

Von für die Anwendung wesentlichem Vorteil ist die wirtschaftliche Produktion und Montage der Konstruktion.

Die Dämpfungs-Konstruktion besteht aus erprobten Bauteilen, ist montagefreundlich und durch die hohe Eigendämpfung in dem gesamten praktischen Frequenzbereich, d.h. im gesamten Anwendungsbereich, optimal einsetzbar, auch bei schwersten windbedingten Seilschwingungen.

Die Bestimmung ihrer Abmessungen ist einfach und macht nicht die kaum lösbaren Schwierigkeiten, die von der Bestimmung von Typ und Lage von Stockbridge-Dämpfern bekannt sind.

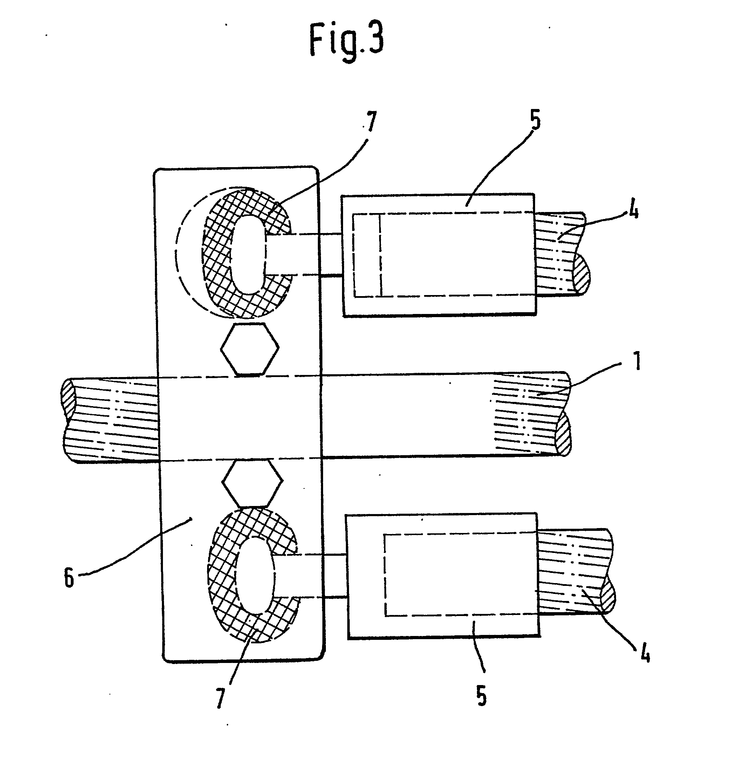

Bei dem in Fig. 3 dargestellten Ausführungsbeispiel sind die an das Leiterseil 1 anzusetzenden Klemmen 6 so ausgebildet, daß zu beiden Seiten des Leiterseiles 1 und in gleichem Abstand von diesem je ein elastisches Formstück 7 umfaßt und gehalten werden kann, über das je eine Armatur 5 mit der Klemme 6 verbunden ist. In beide Armaturen 5 ist das eine Ende eines Beiseiles 4 eingeklemmt. Bei dieser Ausführungsform sind also zwei parallel zueinander verlaufende Beiseile 4 vorgesehen, was ebenfalls eine Möglichkeit ist, eine noch höhere Dämpfungswirkung zu erreichen.

**Patentansprüche**

1. Einrichtung zum Dämpfen der Schwingungen von Freileitungsseilen (1), mit einem Beiseil (4), das an seinen beiden Enden mit je einer Verbindungsvorrichtung (5, 6, 7) fest verbunden ist, die ein das Beiseilende festhaltendes Bauteil (5) aufweist und eine das Freileitungsseil (1) umfassende Klemme (S) bildet, dadurch gekennzeichnet, daß bei wenigstens einer der beiden Verbindungsvorrichtungen (5, 6, 7) das das eine Beiseilende festhaltende Bauteil (5) wenigstens ein gummielastisches Element (7) trägt, das von einer Klemmvorrichtung (6) der Verbindungsvorrichtung (5, 6, 7) umfaßt wird.

2. Einrichtung nach Anspruch 1, dadurch gekennzeichnet, daß beide Verbindungsvorrichtungen wenigstens zwei gummielastische Elemente aufweisen.

3. Einrichtung nach Anspruch 1 oder 2, dadurch gekennzeichnet, daß das Beiseil (4) mit wenigstens einen der beiden es festhaltenden Bauteile (5) durch Pressung verbunden ist.

4. Einrichtung nach einem der Ansprüche 1 bis 3, dadurch gekennzeichnet, daß das Beiseil (4) mit wenigstens einem der beiden es festhaltenden Bauteile (5) durch Klemmung verbunden ist.

5. Einrichtung nach einem der Ansprüche 1 bis 4, dadurch gekennzeichnet, daß die beiderseits einer Hängeklemme (2) im Abstand von dieser am Freileitungsseil (1) anzubringenden Verbindungsvorrichtungen (5, 6, 7) für eine Anordnung des Beiseils (4) unterhalb des Freileitungsseiles (1) ausgebildet sind.

6. Einrichtung nach einem der Ansprüche 1 bis 5, dadurch gekennzeichnet, daß neben oder unter dem Beiseil (4) ein zweites Beiseil (4) angeordnet ist.

7. Einrichtung nach einem der Ansprüche 1 bis 6, dadurch gekennzeichnet, daß jedes vorhandene Beiseil (4) mit den an seinen beiden Enden vorgesehenen Verbindungsvorrichtungen (5, 6, 7) zu einem einbaufertigen Schwingungsdämpfer komplettiert ist.

## Claims

1. Device for damping oscillations in electrical overhead line conductors (1) by means of an auxiliary cable (4), which at each end is firmly attached to the conductor by means of a connecting device (5, 6, 7) having a component (5), which grips the end of the auxiliary cable, and a clamping device (6), which clasps the overhead line conductor (1), and is characterized by the fact that for at least one of the two connecting devices (5, 6, 7), the component gripping the end of the auxiliary cable has at least one moulded-rubber elastic element (7) which is clasped by a clamping device (6) of the connecting device (5, 6, 7).

2. Device as Claim 1, however characterized by the fact that both connecting devices have at least two moulded-rubber elastic elements.

3. Device as Claims 1 or 2, however characterized by the fact that the auxiliary cable (4) is connected to at least one of the two components (5) holding it, by compression.

4. Device as any of Claims 1 to 3, however characterized by the fact that the auxiliary cable (4) is connected to at least one of the two components (5) holding it, by clamping.

5. Device as any of Claims 1 to 4, however characterized by the fact that the connecting devices (5, 6, 7) to be attached to the overhead line conductor (1) on either side of and at a distance from a suspension clamp (2) are configured for the arrangement of the auxiliary cable (4) underneath the overhead line conductor (1).

6. Device as any of Claims 1 to 5, however characterized by the fact that a second auxiliary cable (4) is arranged beside or below the auxiliary cable (4).

7. Device as one of Claims 1 to 6, however characterized by the fact that each auxiliary table (4) present, with the connecting devices (5, 6, 7) provided at each end, has been made into a ready-to-fit vibration damper.

## Revendications

1. Dispositif pour l'amortissement des vibrations des conducteurs des lignes électriques aériennes (1) avec un câble auxiliaire (4) qui est fermement lié de chaque côté par un moyen de liaison (5, 6, 7) ayant un composant (5) qui tient ferme la fin du câble auxiliaire et un borne (6) enserrant le conducteur de la ligne aérienne (1) caractérisé par le fait qu'au moins pour un des deux moyens de liaison (5, 6, 7) le composant tenant la fin du câble auxiliaire (5) porte un élément de gomme élastique (7) qui est entouré par un dispositif de serrage (6) du moyen de liaison (5, 6, 7).

2. Dispositif d'après revendication 1, caractérisé par le fait, que les deux dispositifs de liaison ont au moins deux éléments de gomme élastiques.

3. Dispositif d'après revendication 1 ou 2, caractérisé par le fait que le câble auxiliaire (4) est lié par compression au moins avec un des deux composants (5) le tenant.

4. Dispositif d'après une des revendications 1 à 3, caractérisé par le fait que le câble auxiliaire (4) est lié par serrage au moins avec un des deux composants (5) le tenant.

5. Dispositif d'après une des revendications 1 à 4, caractérisé par le fait que les dispositifs de liaison (5, 6, 7) qui doivent être fixés au conducteur de la ligne aérienne (1) sur les deux côtés et à la distance d'une pince de suspension (2) sont fait pour une disposition du câble auxiliaire (4) au-dessous du conducteur de la ligne aérienne (1).

6. Dispositif d'après une des revendications 1 à 5, caractérisé par le fait qu'à côté ou au-dessous du câble auxiliaire (4) se trouve un deuxième auxiliaire (4).

7. Dispositif d'après une des revendications 1 à 6, caractérisé par le fait que chaque câble auxiliaire existant (4) avec des dispositifs de liaison (5, 6, 7) prévus sur ses deux côtés a été complété à un amortisseur de vibrations prêt à être monté.

EP 0 249 956 B1

Fig.1

Fig.2

# Fig.3